# EUROPEAN PATENT APPLICATION

(11) **EP 4 838 659 A1**
(43) Date of publication of application: **11.11.2026**
(21) Application number: 24937581.7
(22) Date of filing: 09.08.2024
(51) Int. Cl.: H01M 50/244, H01M 50/209, H01M 50/289, H01M 50/242, H01M 10/6556, H01M 10/6568, H01M 10/613

(54) **BATTERY AND ELECTRIC DEVICE HAVING SAME**

(30) Priority: 29.04.2024 CN 202420914184 U
(71) Applicant: Contemporary Amperex Technology Co., Limited, Ningde, Fujian 352100 (CN)
(72) Inventor: WU, Qiaoyun, Ningde, Fujian 352100 (CN); SONG, Feiting, Ningde, Fujian 352100 (CN)
(74) Representative: Ziebig Hengelhaupt Intellectual Property Attorneys Patentanwaltskanzlei PartGmbB
(86) International application number: PCT/CN2024/111181
(87) International publication number: WO 2025/227547

(57) **Abstract**

A battery (10) and an electric device (100) having same. The battery (10) comprises a case (11), which is provided with an accommodating cavity (1101), wherein one side surface of a battery assembly (12) disposed in the accommodating cavity (1101) is fixed to a first wall (1121) of the accommodating cavity (1101); two expansion beams (14) fixedly connected to the case (11) are arranged on two sides of the battery assembly (12), respectively and abut against the battery assembly (12); a first heat exchange member (1301) of a heat exchange assembly is disposed on the other side of the battery assembly (12), and two ends of the first heat exchange member (1301) are fixed to the two expansion beams (14), respectively; a heat exchange tube (131) of the first heat exchange member (1301) comprises a plurality of straight tube sections (1311); the plurality of straight tube sections (1311) extend in a second direction and are arranged at intervals; and two ends of each straight tube section (1311) are connected and fixed to the two expansion beams (14), respectively.

## Description

### CROSS-REFERENCE TO RELATED APPLICATIONS

This application claims priority to Chinese Patent Application No. 202420914184.1, filed on April 29, 2024, which is incorporated herein by reference in its entirety.

### TECHNICAL FIELD

This application relates to the field of battery technologies, and in particular, to a battery and an electric apparatus having the same.

### BACKGROUND

With the gradual deepening of the concept of energy conservation and environmental protection, electric apparatuses powered by electricity have been widely popularized and used on a large scale. Electric devices or electric apparatuses are involved in various fields and usage scenarios in production and life. Consequently, safety-related accidents of electric apparatuses during use are increasing. Therefore, improving the stability of batteries in electric devices during operation is becoming increasingly important.

In the related art, a plurality of battery cells in a battery experience swelling during operation, which reduces the stability of the battery during operation. A heat exchange member in the battery only performs heat exchange and fails to suppress the swelling of the battery cells, and thus has a single function.

### SUMMARY

This application is intended to resolve at least one of the technical problems in the prior art. In view of this, this application provides a battery. In the battery, a heat exchange assembly can be used to be connected and fixed to two expansion beams, so as to cooperate with the expansion beams to stably and reliably suppress the swelling of battery cells, thereby enabling stable and reliable operation of the battery and more diverse functions of the heat exchange assembly.

This application further provides an electric apparatus having the foregoing battery.

The battery according to a first aspect of this application includes: a box, where the box has an accommodating cavity; a battery assembly, where the battery assembly is disposed in the accommodating cavity, one surface of the battery assembly in a first direction is fixed to a first wall of the accommodating cavity, and the battery assembly includes a plurality of battery cells stacked in a second direction; two expansion beams, where the expansion beams are disposed in the accommodating cavity and fixedly connected to the box, the two expansion beams both extend in a third direction and are disposed on two sides of the battery assembly in the second direction respectively, and the two expansion beams both abut against the battery assembly, the first direction, the second direction, and the third direction intersecting with each other; and a heat exchange assembly, where the heat exchange assembly includes a first heat exchange member, the first heat exchange member is disposed on the other side of the battery assembly in the first direction, two ends of the first heat exchange member in the second direction are fixed to the two expansion beams respectively, and the first heat exchange member includes a heat exchange tube, where the heat exchange tube includes a plurality of straight tube segments, the plurality of straight tube segments extend in the second direction and are spaced apart in the third direction, and two ends of the straight tube segment are connected and fixed to the two expansion beams respectively.

In the battery according to this application, the first heat exchange member is disposed on the other side of the battery assembly in the first direction, and two ends of the first heat exchange member in the second direction are fixed to the two expansion beams respectively, so that the first heat exchange member can well perform heat exchange on the battery assembly, and the first heat exchange member can cooperate with the expansion beams to well suppress the swelling of the battery cells, thereby enabling stable and reliable operation of the battery and more diverse functions of the heat exchange assembly.

In an embodiment of this application, the battery further includes a connecting member, and the two ends of the straight tube segment are both fixed to the expansion beam via the connecting member.

In this embodiment, the connecting member is provided to connect and fix the straight tube segment to the expansion beam. Such structure is simple and facilitates stable and reliable fixed connection between the first heat exchange member and the expansion beams.

In some examples of this application, the connecting member is fixed to a side of the expansion beam facing away from the first wall of the accommodating cavity in the first direction, the connecting member and the expansion beam fit together to form a fixing hole, and an end portion of the straight tube segment is configured to be inserted into and fixed within the fixing hole.

In this embodiment, the connecting member and the expansion beam fit together to form the fixing hole, and the end portion of the straight tube segment is inserted into the fixing hole, which facilitates the installation and arrangement of the first heat exchange member and enables the first heat exchange member to be conveniently and easily connected and fixed to the expansion beam via the connecting member.

In an example of this application, the connecting member extends in the third direction. In the third direction, the connecting member is fixed to the expansion beam at two ends and recessed away from the expansion beam at a middle portion to form a recessed portion. The recessed portion and the expansion beam enclose the fixing hole.

In this embodiment, the recessed portion is formed at the middle portion of the connecting member to fit the expansion beam to form the fixing hole. Such structure is simple and easy to process, which can reduce the processing of the expansion beam, enabling the expansion beam to be conveniently and easily manufactured. The connecting member is snap-fitted to clamp the straight tube segment, and the two ends of the connecting member are fixedly connected to the expansion beam, so that the straight tube segment can be stably and reliably connected and fixed to the expansion beam. As a result, the heat exchange tube and the expansion beam can have good connection strength, improving the overall structural rigidity of the heat exchange tube and the expansion beam, thereby further enabling the heat exchange assembly to cooperate with the expansion beam to well suppress the swelling of the battery cells.

In some specific embodiments of this application, the recessed portion is welded to the straight tube segment, and/or the two ends of the connecting member in the third direction are both welded or fastened to the expansion beam.

In these embodiments, the recessed portion is welded to the straight tube segment, and the connecting member is welded or fastened to the expansion beam, so that the heat exchange tube can be stably and reliably connected and fixed to the expansion beam. Thus, the heat exchange tube and the expansion beam have good connection strength, improving the overall structural rigidity of the heat exchange tube, the expansion beam, and the connecting member, and enabling the heat exchange tube to stably and reliably tension the two expansion beams, so that the battery assembly can obtain a stable and good swelling suppression effect.

In an embodiment of this application, the heat exchange tube further includes a bent tube segment, and the bent tube segment is disposed on an outer side of the expansion beam in the second direction and is connected between two adjacent straight tube segments.

In this embodiment, the bent tube segment of the heat exchange tube is disposed on the outer side of the expansion beam in the second direction, which facilitates the connection and fixing of the straight tube segment in the heat exchange tube to the two expansion beams, so that the heat exchange tube can well connect and tension the two expansion beams in the second direction, and the heat exchange tube can form a uniform heat exchange area on the other side of the battery assembly, enabling the first heat exchange member to provide a good and uniform heat exchange effect on the battery assembly.

In an embodiment of this application, the first heat exchange member includes a plurality of heat exchange tubes, and the plurality of heat exchange tubes are spaced apart in the third direction.

In this embodiment, the plurality of heat exchange tubes are provided in the first heat exchange member, and the plurality of heat exchange tubes are spaced apart in the third direction, which enables the first heat exchange member to well meet the heat exchange requirements of the battery assembly, so that the first heat exchange member can well cover the arrangement range of the battery assembly in the third direction, making the length of a single heat exchange tube small, thereby reducing the flow resistance in the heat exchange tube to some extent and enabling the heat exchange tube to provide a good heat exchange effect.

In some examples of this application, the first heat exchange member includes two heat exchange tubes, and the two heat exchange tubes are symmetrically arranged in the third direction.

In this embodiment, two heat exchange tubes are provided in the first heat exchange member. Such structure is simple and can well meet the heat exchange requirements of the battery assembly. The two heat exchange tubes being symmetrically arranged in the third direction facilitates the arrangement of the two heat exchange tubes and the connection and assembly with external liquid supply components, making the assembly of the first heat exchange member in the battery more convenient.

In some embodiments of this application, an adhesive layer is provided between the first heat exchange member and the battery assembly, and the first heat exchange member is adhesively fixed to the battery assembly via the adhesive layer.

In these embodiments, the first heat exchange member is adhesively connected to the battery assembly via the adhesive layer, so that the first heat exchange member can cooperate with the adhesive layer to connect and fix the plurality of battery cells, which can well suppress the swelling of the plurality of battery cells toward a side of the first heat exchange member in the first direction, enabling the first heat exchange member to better suppress the swelling of the battery cells. The side of the plurality of battery cells facing toward the first heat exchange member is connected and fixed by the adhesive layer and the straight tube segments, so the overall structure is more stable, which improves the integrity of the first heat exchange member, the expansion beams, the battery assembly, and the box, results in higher structural rigidity, and can reduce the probability of resonance between the battery and vehicle vibration to some extent, thereby enabling the battery to operate more stably.

In an embodiment of this application, the adhesive layer completely covers a surface of the first heat exchange member facing toward the battery assembly, or the adhesive layer completely covers a surface of the battery assembly facing toward the first heat exchange member.

In this embodiment, the adhesive layer completely covers the surface of the first heat exchange member facing toward the battery assembly, so that the first heat exchange member can be stably and reliably adhesively fixed to the plurality of battery cells in the battery assembly within the extension range of the heat exchange tube, enabling the adhesive layer to be fully used for the connection between the first heat exchange member and the battery assembly. The adhesive layer completely covers the surface of the battery assembly facing toward the first heat exchange member, so that the side of the plurality of battery cells in the battery assembly facing toward the first heat exchange member in the first direction can be stably and reliably adhesively connected by the adhesive layer, the adhesive layer can suppress the swelling of the plurality of battery cells, and the plurality of battery cells can have a more stable overall structure, thereby improving the structural stability of the battery assembly.

In an embodiment of this application, the adhesive layer is a thermally conductive structural adhesive.

In this embodiment, the adhesive layer is configured as the thermally conductive structural adhesive, which enables the adhesive layer to have good adhesive connection strength, makes the adhesive fixing of the plurality of battery cells more firm and stable, and enables good connection strength between the plurality of battery cells in the battery assembly and the first heat exchange member, thereby making the connection between the first heat exchange member and the battery assembly more firm and reliable, and further enabling the first heat exchange member to better cooperate with the adhesive layer to suppress the swelling of the battery cells. The adhesive layer can well perform heat conduction, enabling efficient heat exchange between the first heat exchange member and the battery assembly.

In some embodiments of this application, the heat exchange assembly further includes a second heat exchange member, the second heat exchange member is disposed on a side of the battery assembly facing toward the first wall in the first direction, and the second heat exchange member is fixedly connected to both the battery assembly and the first wall of the accommodating cavity.

In these embodiments, the second heat exchange member is provided on the side of the battery assembly facing toward the first wall, so that the heat exchange assembly can perform heat exchange on the battery assembly simultaneously on both sides of the battery assembly in the first direction, thereby enabling the battery assembly to obtain a more efficient heat exchange effect.

In an embodiment of this application, the second heat exchange member and the first heat exchange member have the same structure, or the second heat exchange member and the first heat exchange member have different structures.

In this embodiment, the structure of the second heat exchange member is set to be the same as or different from that of the first heat exchange member, so that the second heat exchange member can be flexibly set and arranged as needed, thereby enabling the first heat exchange member and the second heat exchange member to cooperate to achieve better heat exchange effect.

In an embodiment of this application, the heat exchange assembly further includes a fluid collecting structure, the fluid collecting structure has a liquid inlet chamber and a liquid outlet chamber that are spaced apart, a first liquid inlet port of the first heat exchange member and a second liquid inlet port of the second heat exchange member are both connected to the liquid inlet chamber, and a first liquid outlet port of the first heat exchange member and a second liquid outlet port of the second heat exchange member are both connected to the liquid outlet chamber.

In this embodiment, the fluid collecting structure is provided in the heat exchange assembly, which facilitates the inflow and outflow of a cooling liquid in the first heat exchange member and the second heat exchange member, can provide good fluid collecting and converging functions, facilitates the connection between the heat exchange assembly and an external cooling liquid supply pipeline, and allows the liquid inlet ports and liquid outlet ports of the first heat exchange member and the second heat exchange member to be arranged in a compact and concentrated manner, thereby facilitating the arrangement of the heat exchange assembly in the accommodating cavity.

In some examples of this application, the fluid collecting structure is disposed on a side of the expansion beam facing away from the battery assembly in the second direction, and the fluid collecting structure includes: a first fluid collecting member, where the first fluid collecting member has the liquid inlet chamber; and a second fluid collecting member, where the second fluid collecting member is provided in two, the two second fluid collecting members are disposed on two sides of the first fluid collecting member in the third direction respectively, and the two second fluid collecting members both have the liquid outlet chamber.

In this embodiment, the first fluid collecting member and the two second fluid collecting members are provided in the fluid collecting structure, and the two second fluid collecting members are disposed on two sides of the first fluid collecting member in the third direction respectively, which can cooperate with the heat exchange tubes spaced apart in the third direction in the first heat exchange member and the second heat exchange member, so that the plurality of heat exchange tubes can be conveniently connected to the liquid inlet chamber or the liquid outlet chamber in the fluid collecting structure. The liquid inlet chamber and the liquid outlet chamber are disposed in the mutually independent first fluid collecting member and second fluid collecting member respectively, so that the position relationship between the liquid inlet chamber and the liquid outlet chamber can be flexibly adjusted when the fluid collecting structure is installed and arranged, thereby facilitating the installation and arrangement of the heat exchange assembly.

In an embodiment of this application, the second heat exchange member is adhesively connected to the battery assembly and the first wall of the accommodating cavity.

In this embodiment, the second heat exchange member is adhesively connected to the battery assembly and the first wall of the accommodating cavity. Such structure is simple and provides convenient and firm fixing, so that the second heat exchange member and the battery assembly can well perform heat exchange, improving the overall structural stability of the heat exchange assembly, the battery assembly, and the box, and ensuring good connection reliability of the heat exchange assembly, the battery assembly, and the box.

In some embodiments of this application, the box includes a box body and a cover plate, the box body has the accommodating cavity open on one side in the first direction, and the cover plate covers the open side of the accommodating cavity.

In these embodiments, the box includes the box body and the cover plate. Such structure is simple and facilitates the installation and arrangement of the battery assembly and the heat exchange assembly, enabling convenient assembly.

An electric apparatus according to a second aspect of this application includes the battery according to the first aspect of this application.

In the electric apparatus according to this application, with the battery according to the first aspect provided, the battery is provided with the first heat exchange member on the other side of the battery assembly in the first direction, and two ends of the first heat exchange member in the second direction are fixed to the two expansion beams respectively, so that the first heat exchange member can well perform heat exchange on the battery assembly, and the first heat exchange member can cooperate with the expansion beams to well suppress the swelling of the battery cells, thereby enabling stable and reliable operation of the battery and more diverse functions of the heat exchange assembly.

For additional aspects and advantages of this application, some will be given in the following description, and some will become apparent in the following description or will be understood in the practice of this application.

### BRIEF DESCRIPTION OF DRAWINGS

FIG. 1 is a schematic diagram of an electric apparatus according to an embodiment of this application;
FIG. 2 is a schematic diagram of a battery according to an embodiment of this application;
FIG. 3 is a schematic diagram of assembly of a heat exchange assembly, a battery assembly, expansion beams, and connecting members according to an embodiment of this application; and
FIG. 4 is a partially enlarged schematic diagram of position A shown in FIG. 3.

### Reference signs:

10. battery;
11. box; 111. cover plate; 112. box body; 1121. first wall; 1101. accommodating cavity;
12. battery assembly; 121. battery cell;
1301. first heat exchange member; 1302. second heat exchange member; 131. heat exchange tube; 1311. straight tube segment; 1312. bent tube segment; 132. fluid collecting structure; 1321. first fluid collecting member; 1322. second fluid collecting member;
14. expansion beam; 15. connecting member; 151. recessed portion; 101. fixing hole;
20. motor; 30. controller; and
100. electric apparatus.

### DESCRIPTION OF EMBODIMENTS

The following describes in detail embodiments of technical solutions of this application with reference to the accompanying drawings. The following embodiments are merely used to describe the technical solutions of this application more clearly, and therefore are merely used as examples and do not constitute any limitation on the protection scope of this application.

Unless otherwise defined, all technical and scientific terms used herein shall have the same meanings as commonly understood by persons skilled in the art to which this application belongs. The terms used herein are merely intended to describe the specific embodiments rather than to limit this application. The terms "include", "have", and any other variations thereof in the specification, claims, and brief description of drawings of this application are intended to cover non-exclusive inclusions.

In the description of the embodiments of this application, the technical terms "first", "second", and the like are merely intended to distinguish between different objects, and shall not be understood as any indication or implication of relative importance or any implicit indication of the number, specific sequence, or primary-secondary relationship of the technical features indicated. In the description of the embodiments of this application, "a plurality of" means more than two, unless otherwise specifically defined.

Reference to "embodiment" in this specification means that specific features, structures, or characteristics described with reference to the embodiment may be included in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the contextually associated objects.

In the description of the embodiments of this application, the term "a plurality of" means more than two (inclusive).

In the description of the embodiments of this application, the orientations or positional relationships indicated by the technical terms "thickness", "upper", "lower", "front", "rear", "left", "right", "bottom", "inside", "outside", and the like are based on the orientations or positional relationships shown in the accompanying drawings. These terms are merely for ease and brevity of the description of the embodiments of this application rather than indicating or implying that the means or elements mentioned must have specific orientations, or must be constructed or manipulated according to specific orientations, and therefore shall not be construed as any limitations on the embodiments of this application.

In the description of the embodiments of this application, unless otherwise specified and defined explicitly, the technical terms "mount", "connect", "join", and "fix" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the embodiments of this application as appropriate to specific situations.

Currently, from a perspective of the market development, traction batteries have been increasingly widely used. Traction batteries have been widely used in energy storage power supply systems such as hydroelectric, thermal, wind, and solar power plants, and many other fields including electric transportation tools such as electric bicycles, electric motorcycles, and electric vehicles, military equipment, and aerospace. With the continuous swelling of application fields of traction batteries, market demands for traction batteries are also increasing. Among currently used traction batteries, lithium-ion batteries account for an increasingly large proportion.

During operation of a battery, a plurality of battery cells within the battery experience swelling. When the swelling of the battery cells is significant, the structure of the battery cells is prone to damage, resulting in battery cell failure, which in turn reduces the operation stability of the battery. In the battery, a heat exchange member for heat exchange is typically provided. The heat exchange member generally only performs heat exchange and is ineffective in suppressing the swelling of the battery cells in the battery assembly, and thus has a relatively single function.

Based on the foregoing considerations, this embodiment provides a battery. A first heat exchange member is connected and fixed to expansion beams, so that the first heat exchange member can cooperate with two expansion beams to suppress the swelling of the battery assembly. Thus, the first heat exchange member can reinforce the structure and suppress the swelling of the battery cells while meeting the heat exchange requirements, thereby enabling stable and reliable operation of the battery and more diverse functions of the heat exchange assembly.

The battery disclosed in the embodiments of this application may be used for electric apparatuses that use a battery as a power source or various energy storage systems that use a battery as an energy storage element. The electric apparatus may be but is not limited to a mobile phone, a tablet, a notebook computer, an electric toy, an electric tool, an electric bicycle, an electric vehicle, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

In the embodiments of this application, the battery cell may be a secondary battery. The secondary battery is a battery cell that can be charged after being discharged, to activate active materials for continuous use. The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, or the like.

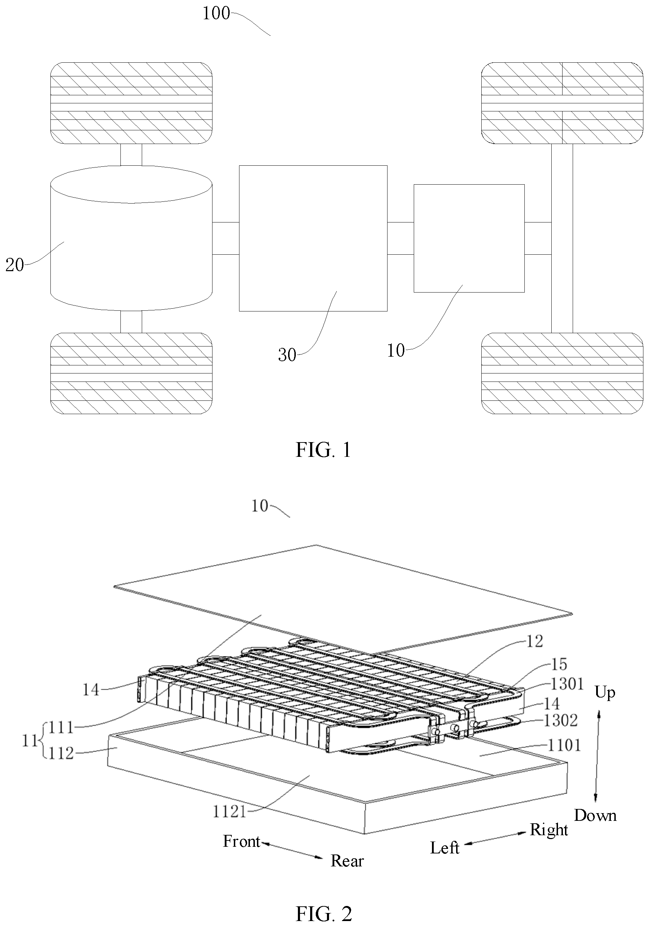

Referring to FIG. 1, FIG. 1 is a schematic diagram of an electric apparatus 100 being a vehicle according to a specific embodiment of this application. The vehicle may be a fossil fuel vehicle, a natural gas vehicle, or a new energy vehicle. The new energy vehicle may be a battery electric vehicle, a hybrid electric vehicle, a range-extended electric vehicle, or the like. The vehicle is provided with a battery 10 inside, where the battery 10 may be disposed at the bottom, front, or rear of the vehicle. The battery 10 may be configured to supply power to the vehicle. For example, the battery 10 may be used as an operational power source for the vehicle. The vehicle may further include a controller 30 and a motor 20, where the controller 30 is configured to control the battery 10 to supply power to the motor 20, for example, to satisfy power needs of start, navigation, and driving of the vehicle.

In some embodiments of this application, the battery 10 can be used as not only the operational power source for the vehicle but also a driving power source for the vehicle, replacing or partially replacing fossil fuel or natural gas to provide driving traction for the vehicle.

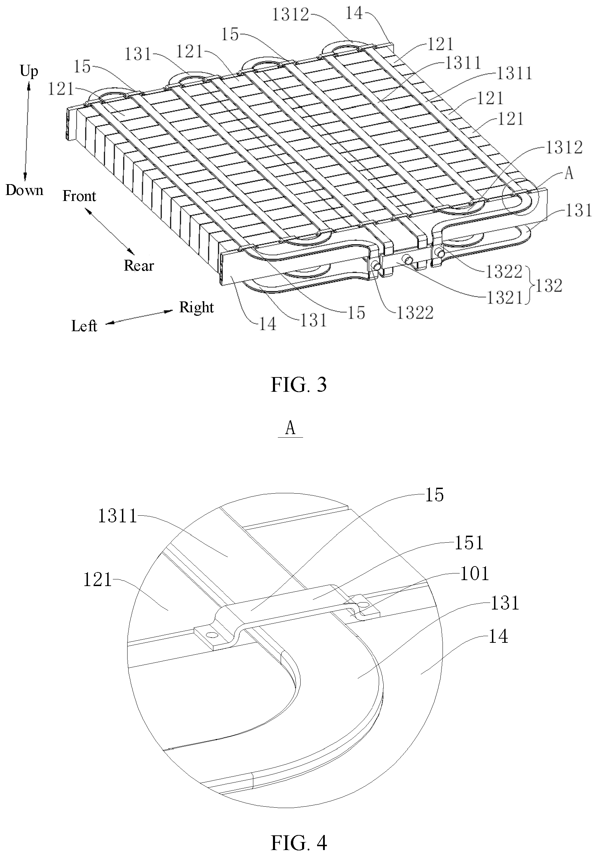

The following describes a battery 10 according to embodiments of a first aspect of this application with reference to FIGs. 2 to 4. FIG. 2 is a schematic diagram of a battery 10 according to an embodiment of this application; FIG. 3 is a schematic diagram of assembly of a heat exchange assembly, a battery assembly 12, expansion beams 14, and connecting members 15 according to an embodiment of this application; and FIG. 4 is a partially enlarged schematic diagram of position A shown in FIG. 3.

As shown in FIG. 2, the battery 10 according to the embodiments of the first aspect of this application includes a box 11, a battery assembly 12, two expansion beams 14, and a heat exchange assembly.

Specifically, the box 11 has an accommodating cavity 1101. The battery assembly 12 is disposed in the accommodating cavity 1101, one surface of the battery assembly 12 in a first direction (the up-down direction shown in FIG. 2) is fixed to a first wall 1121 of the accommodating cavity 1101, and the battery assembly 12 includes a plurality of battery cells 121 stacked in a second direction (the front-rear direction shown in FIG. 2). The expansion beams 14 are disposed in the accommodating cavity 1101 and fixedly connected to the box 11, the two expansion beams 14 both extend in a third direction (the left-right direction shown in FIG. 2) and are disposed on two sides of the battery assembly 12 in the second direction respectively, and the two expansion beams 14 both abut against the battery assembly 12. The first direction, the second direction, and the third direction intersect with each other. The heat exchange assembly includes a first heat exchange member 1301, the first heat exchange member 1301 is disposed on the other side of the battery assembly 12 in the first direction, two ends of the first heat exchange member 1301 in the second direction are fixed to the two expansion beams 14 respectively, and the first heat exchange member 1301 includes a heat exchange tube 131, where the heat exchange tube 131 includes a plurality of straight tube segments 1311, the plurality of straight tube segments 1311 extend in the second direction and are spaced apart in the third direction, and two ends of the straight tube segment 1311 are connected and fixed to the two expansion beams 14 respectively.

In this embodiment, the box 11 may be a hollow structure. The hollow structure of the box 11 forms the accommodating cavity 1101 of the box 11. The box 11 can provide an accommodating space for the battery assembly 12, the expansion beams 14, the heat exchange assembly, and the like. The box 11 may be a variety of structures. For example, the box 11 may include a first portion and a second portion. The first portion and the second portion fit together to jointly define the accommodating cavity 1101. The first portion may be a plate-shaped structure, the second portion may be a hollow structure open on one side, and the first portion covers the opening side of the second portion; or both the first portion and the second portion may be hollow structures open on one side, and the opening side of the first portion is engaged with the opening side of the second portion, so as to jointly define the accommodating cavity 1101. The second portion may alternatively be a ring-shaped structure, the first portion covers an opening of the second portion on one side, and an opening of the second portion on the other side may be sealed by another sealing structure, for example, the opening of the second portion on the other side may be covered and closed by a sealing plate or the like, so as to fit the box 11 to form an enclosed accommodating cavity 1101 space.

The shape of the box 11 can be reasonably set as needed. For example, the box 11 may be a cuboid, a cylinder, or the like.

The battery assembly 12 may be an entirety of a plurality of battery modules composed of a plurality of battery cells 121, or may be an entirety composed of a plurality of battery cells 121. The plurality of battery cells 121 may be connected in series, parallel, or series-parallel as needed. The battery assembly 12 may further include other structures. For example, the battery assembly 12 may include a busbar for implementing electrical connection between the plurality of battery cells 121, and the like.

The battery assembly 12 includes the plurality of battery cells 121 stacked in the second direction. A thickness direction of the battery cells 121 may be the same as the second direction. The number of battery cells 121 may be three, eight, twelve, twenty, or the like. The number of battery cells 121 can be reasonably set according to the design requirements of the battery 10.

One surface of the battery assembly 12 in the first direction is fixed to the first wall 1121 of the accommodating cavity 1101. Specifically, a surface of the plurality of battery cells 121 in the battery assembly 12 facing toward the first wall 1121 may be fixedly connected to the first wall 1121, and the battery assembly 12 may be adhesively fixed to the first wall 1121. For example, the battery assembly 12 may be adhesively fixed to the first wall 1121 through a thermally conductive structural adhesive.

The first direction, the second direction, and the third direction intersecting with each other means that the first direction and the second direction intersect, the first direction and the third direction intersect, and the second direction and the third direction intersect. The intersection herein is intended to indicate that the first direction and the second direction may be perpendicular to each other or form an acute angle or obtuse angle, the first direction and the second direction may be perpendicular to each other or form an acute angle or obtuse angle, and the second direction and the third direction may be perpendicular to each other or form an acute angle or obtuse angle.

In this embodiment, two expansion beams 14 are provided. The expansion beams 14 extend in the third direction. Two ends of the expansion beams 14 in the third direction may be connected to the box 11. For example, the expansion beams 14 may be welded to the box 11, or the expansion beams 14 may be welded to the first wall 1121 of the accommodating cavity 1101. The expansion beams 14 may be processed and manufactured using aluminum alloy or steel material. For example, the expansion beams 14 may be processed using section steel.

The heat exchange assembly includes the first heat exchange member 1301. The first heat exchange member 1301 may be the heat exchange tube 131, a heat exchange plate, a flow channel plate, or the like. The heat exchange assembly may further include other structures. For example, the heat exchange assembly may include an adapter structure for connection with the first heat exchange member 1301 and other components, and a structure for connecting and fixing the first heat exchange member 1301 to other components.

The first heat exchange member 1301 may be directly fixedly connected to the expansion beam 14. For example, the first heat exchange member 1301 may be welded to the expansion beam 14, or the first heat exchange member 1301 may be fixedly connected to the expansion beam 14 via a connecting structure. The thickness of the expansion beam 14 in the second direction can be set according to the usage requirements.

The first heat exchange member 1301 includes the heat exchange tube 131. The heat exchange tube 131 may be provided in one or plurality. The plurality of heat exchange tubes 131 may have the same or different structures. The plurality of heat exchange tubes 131 may be spaced apart or arranged in a mutually coiled manner. The heat exchange tube 131 is formed with the plurality of straight tube segments 1311. For example, the heat exchange tube 131 may be formed with two, three, or four straight tube segments 1311. The heat exchange tube 131 may be a flat tube, a circular tube, a harmonica tube, or a tube of another shape. The heat exchange tube 131 may be an aluminum tube, an aluminum alloy tube, a steel tube, a copper tube, or a tube of another material.

It can be understood that during operation of the battery 10, the plurality of battery cells 121 in the battery assembly 12 experience swelling. Specifically, the battery cells 121 swell in the thickness direction. The swelling of the battery cells 121 is likely to damage the structure of the battery cells 121, causing damage to the housing of the battery cells 121, thereby reducing the operation stability of the battery cells 121 or even causing operation failure. As a result, the operation of the battery assembly 12 becomes unstable, increasing the failure rate of the battery 10 during operation.

In this embodiment, one surface of the battery assembly 12 in the first direction is fixed to the first wall 1121 of the accommodating cavity 1101, and two sides of the battery assembly 12 in the second direction abut against the expansion beams 14 respectively. The first wall 1121 is fixedly connected to the plurality of battery cells 121 in the battery assembly 12, so that the surface of the plurality of battery cells 121 facing toward the first wall 1121 can be stably and reliably connected and fixed, thereby well suppressing the swelling of the battery cells 121. The two expansion beams 14 can well support and limit the two sides of the battery assembly 12 in the second direction, so that when the plurality of battery cells 121 in the battery assembly 12 swell, the two expansion beams 14 can cooperate to resist the swelling force generated by the battery assembly 12, thereby enabling the battery assembly 12 to maintain a stable and reliable operating state.

In this embodiment, the surface of the battery assembly 12 fixedly connected to the first wall 1121 can obtain a good swelling suppression effect under the action of the expansion beams 14 and the first wall 1121. The other side of the battery assembly 12 lacks a structure for suppressing the swelling of the battery cells 121, and the plurality of battery cells 121 maintain a mutually independent connection relationship, and only abut against and clamp each other under the clamping action of the expansion beams 14 on the two sides of the battery assembly 12, resulting in poor resistance to the swelling. The expansion beams 14 are prone to outward tilting and deformation under the impact and extrusion of the swelling force of the battery assembly 12, thereby causing the swelling suppression effect of the expansion beams 14 on the battery assembly 12 to decrease or even fail.

In the related art, a steel strip structure is generally provided on the other side of the battery assembly 12. The steel strip structure is connected to the two expansion beams 14, so that under the connection and tensioning action of the steel strip structure, the two expansion beams 14 can stably and reliably resist the swelling force in the battery assembly 12, and the other side of the plurality of battery cells 121 in the battery assembly 12 can also obtain a good swelling suppression effect, thereby making the operation of the battery assembly 12 more stable and reliable, and enabling the battery 10 to operate stably and reliably.

In the related art, the battery 10 needs to be additionally provided with a steel strip structure to suppress the swelling of the battery cells 121 in the battery assembly 12. The heat exchange assembly generally only performs heat exchange of the battery assembly 12, and thus has a relatively single function. In this embodiment, the heat exchange assembly is provided with the first heat exchange member 1301. The first heat exchange member 1301 is disposed on the other side of the battery assembly 12 in the first direction, that is, the first heat exchange member 1301 is disposed on a side of the battery assembly 12 facing away from the first wall 1121. The two ends of the first heat exchange member 1301 are fixed to the two expansion beams 14 respectively, such that the first heat exchange member 1301 can connect and tension the two expansion beams 14, enabling a more stable overall structure of the two expansion beams 14 and the first heat exchange member 1301 with higher structural rigidity. The first heat exchange member 1301 cooperates with the two expansion beams 14, so that the other side of the plurality of battery cells 121 in the battery assembly 12 can obtain a stable and reliable swelling suppression effect, thereby enabling the battery 10 to operate stably and reliably. The first heat exchange member 1301 can replace the steel strip structure to suppress the swelling of the battery cells 121, thereby reducing the number of parts in the battery 10 and making the overall structure of the battery 10 more compact.

In this embodiment, the plurality of straight tube segments 1311 are spaced apart in the third direction. The straight tube segments 1311 extend in the second direction and two ends thereof are connected and fixed to the two expansion beams 14 respectively, so that the two expansion beams 14 can be connected into an entirety through the plurality of straight tube segments 1311. Each straight tube segment 1311 can connect and tension the two expansion beams 14, so that the first heat exchange member 1301 can be stably and reliably connected and fixed to the two expansion beams 14. Thus, the first heat exchange member 1301 can strengthen the rigidity of the two expansion beams 14, enabling higher overall rigidity of the first heat exchange member 1301 and the expansion beams 14, so that the first heat exchange member 1301 can cooperate with the two expansion beams 14 to better resist the swelling of the plurality of battery cells 121 in the battery assembly 12, and the plurality of battery cells 121 can be subjected to stable and reliable clamping action on a side of the battery assembly 12 facing toward the first heat exchange member 1301, thereby making the operation of the battery assembly 12 more stable.

In this embodiment, the heat exchange tube 131 is provided in the first heat exchange member 1301, the heat exchange tube 131 is provided with the plurality of straight tube segments 1311 extending in the second direction, and the straight tube segments 1311 are connected and fixed to the two expansion beams 14, so that the two expansion beams 14 can be connected and tensioned through the plurality of straight tube segments 1311, and thus the two expansion beams 14 can cooperate with the first heat exchange member 1301 to stably and reliably clamp and fix the battery assembly 12, enabling the plurality of battery cells 121 in the battery assembly 12 to obtain a better swelling suppression effect, thereby making the operation of the battery 10 more stable and reliable.

In the battery 10 according to the embodiments of this application, the first heat exchange member 1301 is disposed on the other side of the battery assembly 12 in the first direction, and two ends of the first heat exchange member 1301 in the second direction are fixed to the two expansion beams 14 respectively, so that the first heat exchange member 1301 can well perform heat exchange on the battery assembly 12, and the first heat exchange member 1301 can cooperate with the expansion beams 14 to well suppress the swelling of the battery cells 121, thereby enabling stable and reliable operation of the battery 10 and more diverse functions of the heat exchange assembly.

In an embodiment of this application, as shown in FIGs. 3 and 4, the battery 10 may further include a connecting member 15, and the two ends of the straight tube segment 1311 are both fixed to the expansion beam 14 via the connecting member 15.

In this embodiment, the connecting member 15 is provided, and the two ends of the straight tube segment 1311 in the second direction are fixed to the expansion beam 14 via the connecting member 15. The connecting member 15 may be a plate-shaped structure, a flange structure, or the like. The material of the connecting member 15 may be the same as that of the first heat exchange member 1301 or that of the expansion beam 14. For example, the connecting member 15 may be an aluminum alloy member, a steel member, or the like. The connecting member 15 may be welded to both the straight tube segment 1311 and the expansion beam 14. The connecting member 15 is provided in plurality. Specifically, two ends of each straight tube segment 1311 fixed to the expansion beams 14 may be both provided with the connecting members 15. The number of connecting members 15 can be set according to the connection requirements between the first heat exchange member 1301 and the two expansion beams 14.

In this embodiment, the connecting member 15 is provided to connect and fix the straight tube segment 1311 to the expansion beam 14. Such structure is simple and facilitates stable and reliable fixed connection between the first heat exchange member 1301 and the expansion beams 14.

In some examples of this application, as shown in FIGs. 3 and 4, the connecting member 15 can be fixed to a side of the expansion beam 14 facing away from the first wall 1121 of the accommodating cavity 1101 in the first direction. The connecting member 15 and the expansion beam 14 fit together to form a fixing hole 101. An end portion of the straight tube segment 1311 is configured to be inserted into and fixed within the fixing hole 101.

In this embodiment, the connecting member 15 and the expansion beam 14 fit together to form the fixing hole 101. A groove structure may be formed on a side of the connecting member 15 facing toward the expansion beam 14, on a side of the expansion beam 14 facing toward the connecting member 15, or on both the connecting member 15 and the expansion beam 14, so that the connecting member 15 and the expansion beam 14 can fit together to form the fixing hole 101. The fixing hole 101 can extend in the second direction. The connecting member 15 is fixed to the side of the expansion beam 14 facing away from the first wall 1121 of the accommodating cavity 1101 in the first direction. The connecting member 15 may be welded or adhesively fixed to a surface of the expansion beam 14.

It can be understood that the first heat exchange member 1301 needs to partially extend beyond the two expansion beams 14 in the second direction when being disposed on the other side of the battery assembly 12, so as to achieve a good heat exchange effect on the battery assembly 12 and facilitate the connection of the first heat exchange member 1301 with an external liquid supply pipeline.

In this embodiment, the connecting member 15 and the expansion beam 14 fit together to form the fixing hole 101, and the end portion of the straight tube segment 1311 is inserted into the fixing hole 101, which facilitates the installation and arrangement of the first heat exchange member 1301 and enables the first heat exchange member 1301 to be conveniently and easily connected and fixed to the expansion beam 14 via the connecting member 15.

In an example of this application, as shown in FIG. 4, the connecting member 15 can extend in the third direction. In the third direction, the connecting member 15 is fixed to the expansion beam 14 at two ends and recessed away from the expansion beam 14 at a middle portion to form a recessed portion 151. The recessed portion 151 and the expansion beam 14 enclose the fixing hole 101.

The middle portion of the connecting member 15 is recessed away from the expansion beam 14 to form the recessed portion 151. Specifically, in the first direction, the middle portion of the connecting member 15 is recessed away from the expansion beam 14 to form the recessed portion 151 with an opening facing toward the expansion beam 14. The recessed portion 151 penetrates the connecting member 15 in the second direction. The two ends of the connecting member 15 in the third direction are welded or fastened to the expansion beam 14. The recessed portion 151 and the surface of the expansion beam 14 fit together to form a hole wall of the fixing hole 101. When the connecting member 15 is fixed to the end portion of the straight tube segment 1311, the connecting member 15 is snap-fitted from a side of the straight tube segment 1311 facing away from the expansion beam 14 and clamps the straight tube segment 1311, and the recessed portion 151 of the connecting member 15 is fixedly connected to the straight tube segment 1311.

In this embodiment, the connecting member 15 is configured to extend in the third direction, which enables the connecting member 15 to be well aligned with the extension direction of the expansion beam 14, facilitating the connection and fixing of the connecting member 15 to the expansion beam 14.

In this embodiment, the recessed portion 151 is formed at the middle portion of the connecting member 15 to fit the expansion beam 14 to form the fixing hole 101. Such structure is simple and easy to process, which can reduce the processing of the expansion beam 14, enabling the expansion beam 14 to be conveniently and easily manufactured. The connecting member 15 is snap-fitted to clamp the straight tube segment 1311, and the two ends of the connecting member 15 are fixedly connected to the expansion beam 14, so that the straight tube segment 1311 can be stably and reliably connected and fixed to the expansion beam 14. As a result, the heat exchange tube 131 and the expansion beam 14 can have good connection strength, improving the overall structural rigidity of the heat exchange tube 131 and the expansion beam 14, thereby further enabling the heat exchange assembly to cooperate with the expansion beam 14 to well suppress the swelling of the battery cells 121.

In some specific embodiments of this application, as shown in FIG. 4, the recessed portion 151 may be welded to the straight tube segment 1311.

In these embodiments, the recessed portion 151 is welded to the straight tube segment 1311. Specifically, the recessed portion 151 may be welded to the straight tube segment 1311 by brazing. During welding, the solder melts and is integrated with the straight tube segment 1311 and the connecting member 15 to form a weld joint structure with higher structural strength.

In these embodiments, the recessed portion 151 of the connecting member 15 is welded to the straight tube segment 1311, which enables the connecting member 15 to be reliably connected and fixed to the straight tube segment 1311, and makes the connection position between the straight tube segment 1311 and the connecting member 15 have higher structural strength, thereby enhancing the overall structural strength of the connecting member 15 and the heat exchange tube 131, and further enabling the heat exchange tube 131 to better cooperate with the expansion beam 14 to suppress the swelling of the battery cells 121 in the battery assembly 12.

In some specific embodiments of this application, as shown in FIG. 4, the two ends of the connecting member 15 in the third direction may be both welded or fastened to the expansion beam 14.

In these embodiments, the connecting member 15 is welded or fastened to the expansion beam 14. The connecting member 15 may be connected and fixed to the expansion beam 14 by brazing or in other welding manners. The connecting member 15 may alternatively be connected and fixed to the expansion beam 14 through fasteners. For example, the connecting member 15 may be fastened to the expansion beam 14 by bolts.

In these embodiments, the two ends of the connecting member 15 are welded or fastened to the expansion beam 14, which enables the connecting member 15 to be stably and reliably connected and fixed to the expansion beam 14, providing higher connection strength and effectively reducing the probability of loosening between the connecting member 15 and the expansion beam 14. Thus, the heat exchange tube 131 can be more stably and reliably connected and fixed to the expansion beam 14, and the heat exchange tube 131 can cooperate with the expansion beam 14 to stably and reliably suppress the swelling of the battery cells 121, enabling the battery 10 to operate stably.

In some specific embodiments of this application, referring to FIG. 4, the recessed portion 151 may be welded to the straight tube segment 1311, and the two ends of the connecting member 15 in the third direction may be both welded or fastened to the expansion beam 14.

In these embodiments, the recessed portion 151 is welded to the straight tube segment 1311, and the connecting member 15 is welded or fastened to the expansion beam 14. When the connecting member 15 is connected and assembled to the heat exchange tube 131 and the expansion beam 14, the connecting member 15 may be preprocessed to form the recessed portion 151. After the connecting member 15 fits the end portion of the straight tube segment 1311 in the heat exchange tube 131, they are welded, such that the plurality of connecting members 15 can form an integral structure with the heat exchange tube 131. Then, the plurality of connecting members 15 are installed and arranged together with the heat exchange tube 131 on the expansion beam 14. The two ends of the connecting member 15 in the second direction are both connected and fixed to the expansion beam 14 by welding or fastening, and thus the heat exchange tube 131 is connected and fixed to the expansion beam 14.

In these embodiments, the recessed portion 151 is welded to the straight tube segment 1311, and the connecting member 15 is welded or fastened to the expansion beam 14, so that the heat exchange tube 131 can be stably and reliably connected and fixed to the expansion beam 14. Thus, the heat exchange tube 131 and the expansion beam 14 have good connection strength, improving the overall structural rigidity of the heat exchange tube 131, the expansion beam 14, and the connecting member 15, and enabling the heat exchange tube 131 to stably and reliably tension the two expansion beams 14, so that the battery assembly 12 can obtain a stable and good swelling suppression effect.

In an embodiment of this application, as shown in FIG. 3, the heat exchange tube 131 may further include a bent tube segment 1312. The bent tube segment 1312 is disposed on an outer side of the expansion beam 14 in the second direction and is connected between two adjacent straight tube segments 1311.

The bent tube segment 1312 may be a semicircular bent tube, an arc-shaped bent tube, a quarter-circular bent tube, or the like. The bent tube segment 1312 is connected between two straight tube segments 1311. Specifically, the plurality of straight tube segments 1311 are connected end to end through a plurality of bent tube segments 1312 to form a pipeline structure that meanders and extends in the second direction and the third direction. The radius of the bent tube segment 1312 can be correspondingly set according to the spacing between the plurality of branch tube segments in the third direction. The bent tube segment 1312 is disposed on the outer side of the expansion beam 14 in the second direction. The outer side refers to a side of the expansion beam 14 facing away from the battery assembly 12. When the heat exchange tube 131 is installed and arranged with the expansion beam 14 and the battery assembly 12, the plurality of straight tube segments 1311 of the heat exchange tube 131 are all disposed on the other side of the battery assembly 12 in the first direction, and the plurality of bent tube segments 1312 of the heat exchange tube 131 are all disposed on the two sides of the battery assembly 12 in the second direction.

In this embodiment, the bent tube segment 1312 of the heat exchange tube 131 is disposed on the outer side of the expansion beam 14 in the second direction, which facilitates the connection and fixing of the straight tube segment 1311 in the heat exchange tube 131 to the two expansion beams 14, so that the heat exchange tube 131 can well connect and tension the two expansion beams 14 in the second direction, and the heat exchange tube 131 can form a uniform heat exchange area on the other side of the battery assembly 12, enabling the first heat exchange member 1301 to provide a good and uniform heat exchange effect on the battery assembly 12.

In an embodiment of this application, referring to FIGs. 2 and 3, the first heat exchange member 1301 may include a plurality of heat exchange tubes 131, and the plurality of heat exchange tubes 131 are spaced apart in the third direction.

Two, three, four, or five heat exchange tubes 131 may be provided in the first heat exchange member 1301. The plurality of heat exchange tubes 131 are spaced apart in the third direction. The number of heat exchange tubes 131 can be reasonably set according to the heat exchange requirements.

In this embodiment, the plurality of heat exchange tubes 131 are provided in the first heat exchange member 1301, and the plurality of heat exchange tubes 131 are spaced apart in the third direction, which enables the first heat exchange member 1301 to well meet the heat exchange requirements of the battery assembly 12, so that the first heat exchange member 1301 can well cover the arrangement range of the battery assembly 12 in the third direction, making the length of a single heat exchange tube 131 small, thereby reducing the flow resistance in the heat exchange tube 131 to some extent and enabling the heat exchange tube 131 to provide a good heat exchange effect.

In some examples of this application, referring to FIGs. 2 and 3, the first heat exchange member 1301 may include two heat exchange tubes 131, and the two heat exchange tubes 131 are symmetrically arranged in the third direction.

In this embodiment, the first heat exchange member 1301 includes two heat exchange tubes 131, and the two heat exchange tubes 131 are symmetrically arranged in the third direction. Being symmetrically arranged in the third direction herein means that the two heat exchange tubes 131 are symmetric with respect to a plane perpendicular to the third direction. The symmetric ends of the two heat exchange tubes 131 are both located on the same side of the first heat exchange member 1301 in the second direction. For example, when the two ends of the heat exchange tube 131 are arranged on the same side of the heat exchange tube 131 in the second direction, the two ends of the two heat exchange tubes 131 can both be arranged on the same side of the heat exchange tube 131 in the second direction.

In this embodiment, two heat exchange tubes 131 are provided in the first heat exchange member 1301. Such structure is simple and can well meet the heat exchange requirements of the battery assembly 12. The two heat exchange tubes 131 being symmetrically arranged in the third direction facilitates the arrangement of the two heat exchange tubes 131 and the connection and assembly with external liquid supply components, making the assembly of the first heat exchange member 1301 in the battery 10 more convenient.

In some embodiments of this application, referring to FIGs. 2 and 3, an adhesive layer may be provided between the first heat exchange member 1301 and the battery assembly 12, and the first heat exchange member 1301 is adhesively fixed to the battery assembly 12 via the adhesive layer.

In these embodiments, the adhesive layer is provided between the first heat exchange member 1301 and the battery assembly 12, and the adhesive layer adhesively fixes the first heat exchange member 1301 to the battery assembly 12. Specifically, the adhesive layer is bonded to a surface of the plurality of battery cells 121 in the battery assembly 12 facing toward the first heat exchange member 1301. The surface of the plurality of battery cells 121 facing toward the first heat exchange member 1301 is connected and fixed by an adhesive member. The heat exchange tube 131 in the first heat exchange member 1301 is adhesively connected to one surface of the battery cells 121. Specifically, the straight tube segment 1311 of the heat exchange tube 131 is adhesively connected to the surface of the plurality of battery cells 121.

In these embodiments, the first heat exchange member 1301 is adhesively connected to the battery assembly 12 via the adhesive layer, so that the first heat exchange member 1301 can cooperate with the adhesive layer to connect and fix the plurality of battery cells 121, which can well suppress the swelling of the plurality of battery cells 121 toward a side of the first heat exchange member 1301 in the first direction, enabling the first heat exchange member 1301 to better suppress the swelling of the battery cells 121. The side of the plurality of battery cells 121 facing toward the first heat exchange member 1301 is connected and fixed by the adhesive layer and the straight tube segments 1311, so the overall structure is more stable, which improves the integrity of the first heat exchange member 1301, the expansion beams 14, the battery assembly 12, and the box 11, results in higher structural rigidity, and can reduce the probability of resonance between the battery 10 and vehicle vibration to some extent, thereby enabling the battery 10 to operate more stably.

In an embodiment of this application, referring to FIGs. 2 and 3, the adhesive layer may completely cover a surface of the first heat exchange member 1301 facing toward the battery assembly 12.

In this embodiment, the adhesive layer completely covers the surface of the first heat exchange member 1301 facing toward the battery assembly 12. Specifically, the adhesive layer covers a surface of the straight tube segment 1311 of the heat exchange tube 131 located between the two expansion beams 14 facing toward the battery assembly 12. The adhesive layer is bonded between the surface of the straight tube segment 1311 and the surface of the plurality of battery cells 121 in the battery assembly 12 facing toward the first heat exchange member 1301.

In this embodiment, the adhesive layer completely covers the surface of the first heat exchange member 1301 facing toward the battery assembly 12, so that the first heat exchange member 1301 can be stably and reliably adhesively fixed to the plurality of battery cells 121 in the battery assembly 12 within the extension range of the heat exchange tube 131, enabling the adhesive layer to be fully used for the connection between the first heat exchange member 1301 and the battery assembly 12.

In an embodiment of this application, referring to FIGs. 2 and 3, the adhesive layer may completely cover a surface of the battery assembly 12 facing toward the first heat exchange member 1301.

In this embodiment, the adhesive layer completely covers the surface of the battery assembly 12 facing toward the first heat exchange member 1301. Specifically, in the battery assembly 12, a surface of the plurality of battery cells 121 facing toward the second heat exchange member 1302 is covered with the adhesive layer, and part of the adhesive layer can be used to be adhesively fixed to the first heat exchange member 1301.

In this embodiment, the adhesive layer completely covers the surface of the battery assembly 12 facing toward the first heat exchange member 1301, so that the side of the plurality of battery cells 121 in the battery assembly 12 facing toward the first heat exchange member 1301 in the first direction can be stably and reliably adhesively connected by the adhesive layer, the adhesive layer can suppress the swelling of the plurality of battery cells 121, and the plurality of battery cells 121 can have a more stable overall structure, thereby improving the structural stability of the battery assembly 12.

In an embodiment of this application, the adhesive layer may be a thermally conductive structural adhesive.

The thermally conductive structural adhesive has good thermal conductivity, adhesive strength, temperature resistance, and anti-aging performance.

In this embodiment, the adhesive layer is configured as the thermally conductive structural adhesive, which enables the adhesive layer to have good adhesive connection strength, makes the adhesive fixing of the plurality of battery cells 121 more firm and stable, and enables good connection strength between the plurality of battery cells 121 in the battery assembly 12 and the first heat exchange member 1301, thereby making the connection between the first heat exchange member 1301 and the battery assembly 12 more firm and reliable, and further enabling the first heat exchange member 1301 to better cooperate with the adhesive layer to suppress the swelling of the battery cells 121. The adhesive layer can well perform heat conduction, enabling efficient heat exchange between the first heat exchange member 1301 and the battery assembly 12.

In some embodiments of this application, as shown in FIGs. 2 and 3, the heat exchange assembly may further include a second heat exchange member 1302. The second heat exchange member 1302 is disposed on a side of the battery assembly 12 facing toward the first wall 1121 in the first direction. The second heat exchange member 1302 is fixedly connected to both the battery assembly 12 and the first wall 1121 of the accommodating cavity 1101.

The second heat exchange member 1302 may be a coil, a heat exchange plate, a flow channel plate, or the like. The surface of the plurality of battery cells 121 in the battery assembly 12 facing toward the first wall 1121 can abut against and be adhesively connected to the second heat exchange member 1302. The second heat exchange member 1302 can abut against and be adhesively connected to the first wall 1121 of the accommodating cavity 1101.

In these embodiments, the second heat exchange member 1302 is provided on the side of the battery assembly 12 facing toward the first wall 1121, so that the heat exchange assembly can perform heat exchange on the battery assembly 12 simultaneously on both sides of the battery assembly 12 in the first direction, thereby enabling the battery assembly 12 to obtain a more efficient heat exchange effect.

In an embodiment of this application, as shown in FIG. 2, the second heat exchange member 1302 and the first heat exchange member 1301 may have the same structure, or the second heat exchange member 1302 and the first heat exchange member 1301 may have different structures.

The second heat exchange member 1302 and the first heat exchange member 1301 may have the same structure, meaning that the second heat exchange member 1302 may have the same number of heat exchange tubes 131 as the first heat exchange member 1301, the heat exchange tubes 131 are arranged in the same manner, the arrangement positions of the heat exchange tubes 131 relative to the expansion beams 14 and the battery assembly 12 may be the same, and the second heat exchange member 1302 may also be fixedly connected to the expansion beams 14. The second heat exchange member 1302 may alternatively be set to a structure different from that of the first heat exchange member 1301 according to the heat exchange requirements or installation and arrangement requirements. For example, the second heat exchange member 1302 may be set to a cold plate structure, and a greater number of heat exchange tubes 131 in the second heat exchange member 1302 may be provided, or the like.

In this embodiment, the structure of the second heat exchange member 1302 is set to be the same as or different from that of the first heat exchange member 1301, so that the second heat exchange member 1302 can be flexibly set and arranged as needed, thereby enabling the first heat exchange member 1301 and the second heat exchange member 1302 to cooperate to achieve better heat exchange effect.

In an embodiment of this application, as shown in FIG. 3, the heat exchange assembly may further include a fluid collecting structure 132. The fluid collecting structure 132 has a liquid inlet chamber and a liquid outlet chamber that are spaced apart. A first liquid inlet port of the first heat exchange member 1301 and a second liquid inlet port of the second heat exchange member 1302 are both connected to the liquid inlet chamber. A first liquid outlet port of the first heat exchange member 1301 and a second liquid outlet port of the second heat exchange member 1302 are both connected to the liquid outlet chamber.

The fluid collecting structure 132 is provided with the liquid inlet chamber and the liquid outlet chamber that are spaced apart. When the heat exchange assembly is assembled, the first liquid inlet port of the first heat exchange member 1301 and the second liquid inlet port of the second heat exchange member 1302 are connected to the liquid inlet chamber, and the first liquid outlet port of the first heat exchange member 1301 and the second liquid outlet port of the second heat exchange member 1302 are connected to the liquid outlet chamber. The liquid inlet chamber and the liquid outlet chamber in the fluid collecting structure 132 may be spaced apart in the first direction, the second direction, or the third direction. The arrangement of the liquid inlet chamber and the liquid outlet chamber in the fluid collecting structure 132 can be reasonably set according to the installation and arrangement requirements and usage requirements.

During operation of the battery 10, the heat exchange assembly operates. A cooling liquid can flow from the liquid inlet chamber of the fluid collecting structure 132 into the first heat exchange member 1301 and the second heat exchange member 1302 simultaneously through the first liquid inlet port and the second liquid outlet port. The cooling liquid flows along the heat exchange tubes 131 in the first heat exchange member 1301 and the second heat exchange member 1302 to exchange heat with the battery assembly 12. The cooling liquid after heat exchange is collected from the first liquid outlet port and the second liquid outlet port and flows into the liquid outlet chamber of the fluid collecting structure 132.

In this embodiment, the fluid collecting structure 132 is provided in the heat exchange assembly, which facilitates the inflow and outflow of the cooling liquid in the first heat exchange member 1301 and the second heat exchange member 1302, can provide good fluid collecting and converging functions, facilitates the connection between the heat exchange assembly and an external cooling liquid supply pipeline, and allows the liquid inlet ports and liquid outlet ports of the first heat exchange member 1301 and the second heat exchange member 1302 to be arranged in a compact and concentrated manner, thereby facilitating the arrangement of the heat exchange assembly in the accommodating cavity 1101.

In some examples of this application, as shown in FIG. 3, the fluid collecting structure 132 may be disposed on a side of the expansion beam 14 facing away from the battery assembly 12 in the second direction. The fluid collecting structure 132 may include a first fluid collecting member 1321 and a second fluid collecting member 1322. The first fluid collecting member 1321 has the liquid inlet chamber. The second fluid collecting member 1322 is provided in two. The two second fluid collecting members 1322 are disposed on two sides of the first fluid collecting member 1321 in the third direction respectively, and the two second fluid collecting members 1322 both have the liquid outlet chamber.

In this embodiment, the fluid collecting structure 132 is disposed on the side of the expansion beam 14 facing away from the battery assembly 12 in the second direction, that is, the fluid collecting structure 132 is disposed on the outer side of the expansion beam 14 in the second direction. The fluid collecting structure 132 is provided with the first fluid collecting member 1321 and the second fluid collecting member 1322. The first fluid collecting member 1321 has the liquid inlet chamber, the second fluid collecting member 1322 has the liquid outlet chamber, and the second fluid collecting member 1322 is provided in two, which are disposed on two sides of the first fluid collecting member 1321 in the third direction respectively. The first fluid collecting member 1321 and the second fluid collecting member 1322 may be aluminum members or plastic members.

As shown in FIG. 3, in this embodiment, both the first heat exchange member 1301 and the second heat exchange member 1302 are provided with two heat exchange tubes 131. Among the four heat exchange tubes 131 of the first heat exchange member 1301 and the second heat exchange member 1302 that are disposed opposite each other in the first direction, the first liquid inlet ports and the second liquid inlet ports can both be connected to the liquid inlet chamber of the first fluid collecting member 1321, and two first liquid outlet ports and two second liquid outlet ports can be connected to the liquid outlet chamber of the closer second fluid collecting member 1322 according to the arrangement position.

In this embodiment, the first fluid collecting member 1321 and the two second fluid collecting members 1322 are provided in the fluid collecting structure 132, and the two second fluid collecting members 1322 are disposed on two sides of the first fluid collecting member 1321 in the third direction respectively, which can cooperate with the heat exchange tubes 131 spaced apart in the third direction in the first heat exchange member 1301 and the second heat exchange member 1302, so that the plurality of heat exchange tubes 131 can be conveniently connected to the liquid inlet chamber or the liquid outlet chamber in the fluid collecting structure 132. The liquid inlet chamber and the liquid outlet chamber are disposed in the mutually independent first fluid collecting member 1321 and second fluid collecting member 1322 respectively, so that the position relationship between the liquid inlet chamber and the liquid outlet chamber can be flexibly adjusted when the fluid collecting structure 132 is installed and arranged, thereby facilitating the installation and arrangement of the heat exchange assembly.

In an example of this application, referring to FIG. 3, a liquid inlet communicating with the liquid inlet chamber may be formed on the first fluid collecting member 1321, and a liquid outlet communicating with the liquid outlet chamber may be formed on the second fluid collecting member 1322.

During assembly of the battery 10, the fluid collecting structure 132 in the heat exchange assembly can be connected to a liquid supply pipeline and a return pipeline of an external liquid supply device through the liquid inlet and the liquid outlet respectively. During operation of the heat exchange assembly, the cooling liquid can flow into the liquid inlet chamber from the liquid inlet and be distributed into the first heat exchange member 1301 and the second heat exchange member 1302. The cooling liquid after heat exchange can converge into the liquid outlet chamber and flow out from the liquid outlet, thereby enabling circulation of the cooling liquid.

In this embodiment, the liquid inlet is provided on the first fluid collecting member 1321 and the liquid outlet is provided on the second fluid collecting member 1322. Such structure is simple, and facilitates the connection between the heat exchange assembly and the external liquid supply device, so that the heat exchange assembly can well operate for heat exchange.

In an embodiment of this application, referring to FIG. 2, the second heat exchange member 1302 is adhesively connected to the battery assembly 12 and the first wall 1121 of the accommodating cavity 1101.

In this embodiment, the second heat exchange member 1302 is adhesively connected to the battery assembly 12 and the first wall 1121 of the accommodating cavity 1101. The second heat exchange member 1302 may be adhesively fixed to the battery assembly 12 through a thermally conductive structural adhesive, and the second heat exchange member 1302 may be adhesively fixed to the first wall 1121 of the accommodating cavity 1101 through a thermally conductive structural adhesive.

In this embodiment, the second heat exchange member 1302 is adhesively connected to the battery assembly 12 and the first wall 1121 of the accommodating cavity 1101. Such structure is simple and provides convenient and firm fixing, so that the second heat exchange member 1302 and the battery assembly 12 can well perform heat exchange, improving the overall structural stability of the heat exchange assembly, the battery assembly 12, and the box 11, and ensuring good connection reliability of the heat exchange assembly, the battery assembly 12, and the box 11.

In some embodiments of this application, as shown in FIG. 2, the box 11 includes a box body 112 and a cover plate 111. The box body 112 has the accommodating cavity 1101 open on one side in the first direction, and the cover plate 111 covers the open side of the accommodating cavity 1101.

The box body 112 is formed with the accommodating cavity 1101 open on one side in the first direction. The battery assembly 12 and the heat exchange assembly are installed and arranged into the accommodating cavity 1101 from the open side of the accommodating cavity 1101. The cover plate 111 covers the open side to form an enclosed accommodating cavity 1101. A bottom wall of the accommodating cavity 1101 forms the first wall 1121.

In these embodiments, the box 11 includes the box body 112 and the cover plate 111. Such structure is simple and facilitates the installation and arrangement of the battery assembly 12 and the heat exchange assembly, enabling convenient assembly.

The following describes an electric apparatus 100 according to embodiments of a second aspect of this application with reference to FIGs. 1 to 4.

As shown in FIG. 1, the electric apparatus 100 according to the embodiments of this application includes the battery 10 according to the embodiments of the first aspect of this application.

Other compositions and operations of the electric apparatus 100 according to the embodiments of this application are all known to persons of ordinary skill in the art and are not described in detail herein.

In the electric apparatus 100 according to the embodiments of this application, with the battery 10 according to the embodiments of the first aspect provided, the battery 10 is provided with the first heat exchange member 1301 on the other side of the battery assembly 12 in the first direction, and two ends of the first heat exchange member 1301 in the second direction are fixed to the two expansion beams 14 respectively, so that the first heat exchange member 1301 can well perform heat exchange on the battery assembly 12, and the first heat exchange member 1301 can cooperate with the expansion beams 14 to well suppress the swelling of the battery cells 121, thereby enabling stable and reliable operation of the battery 10 and more diverse functions of the heat exchange assembly.

The following describes the electric apparatus 100 according to a specific embodiment of this application with reference to FIGs. 1 to 4.

As shown in FIGs. 1 to 4, the electric apparatus 100 is a vehicle. The vehicle includes a battery 10, a motor 20, and a controller 30. The controller 30 is electrically connected to the battery 10 and the motor 20.

The battery 10 includes a box 11, an expansion beam 14, a battery assembly 12, a heat exchange assembly, a connecting member 15, and an adhesive layer. The box 11 includes a box body 112 and a cover plate 111. The box body 112 has an accommodating cavity 1101 open on one side in the first direction. The cover plate 111 covers the open side of the accommodating cavity 1101 and fits the box body 112 to define an enclosed accommodating cavity 1101. The battery assembly 12, the heat exchange assembly, the adhesive layer, and the expansion beam 14 are all disposed in the accommodating cavity 1101.

The expansion beam 14 is provided in two. The two expansion beams 14 both extend in the third direction and are spaced apart in the second direction. One side of the expansion beam 14 in the first direction is welded to a bottom wall of the accommodating cavity 1101. Two ends of the expansion beam 14 in the third direction can be welded to side walls of the accommodating cavity 1101 respectively. The battery assembly 12 is disposed between the two expansion beams 14. The battery assembly 12 includes a plurality of battery cells 121 disposed in layers in the second direction. The battery assembly 12 abuts against the two expansion beams 14.

The heat exchange assembly includes a first heat exchange member 1301, a second heat exchange member 1302, and a fluid collecting structure 132. The first heat exchange member 1301 and the second heat exchange member 1302 are disposed on two sides of the battery assembly 12 in the first direction respectively. The first heat exchange member 1301 and the second heat exchange member 1302 have the same structure and are symmetrically arranged in the first direction. Being symmetrically arranged in the first direction herein means that the first heat exchange member 1301 and the second heat exchange member 1302 are symmetric with respect to a plane perpendicular to the first direction.

The first heat exchange member 1301 is disposed between the battery assembly 12 and the cover plate 111. The battery assembly 12 includes two heat exchange tubes 131. The heat exchange tube 131 includes a straight tube segment 1311 and a bent tube segment 1312. The straight tube segment 1311 is provided in four, and the bent tube segment 1312 is provided in three. The four straight tube segments 1311 extend in the second direction and are spaced apart in the third direction. The bent tube segments 1312 are connected between adjacent straight tube segments 1311, such that the four straight tube segments 1311 are connected end to end, and the heat exchange tube 131 forms a meandering pipeline. Both ends of the straight tube segment 1311 are provided with the connecting members 15. The connecting member 15 extends in the third direction and forms a recessed portion 151 at the middle portion. An end portion of the straight tube segment 1311 is inserted into the recessed portion 151 and is welded to the recessed portion 151. Two ends of the connecting member 15 are fixedly connected to the expansion beam 14 through fasteners. In another embodiment, two ends of the connecting member 15 may be welded to the expansion beam 14. A thermally conductive structural adhesive is applied between the first heat exchange member 1301 and the battery assembly 12. A thermally conductive structural adhesive is applied between the second heat exchange member 1302 and the battery assembly 12 as well as the bottom wall of the accommodating cavity 1101.

Two ends of the heat exchange tube 131 are disposed on an outer side of the expansion beam 14 and located on the same side of the expansion beam 14 in the second direction. The two ends of the heat exchange tube 131 form a first liquid inlet port and a first liquid outlet port respectively. The fluid collecting structure 132 includes a first fluid collecting member 1321 and a second fluid collecting member 1322. The first fluid collecting member 1321 is provided with a liquid inlet chamber and a liquid inlet communicating with the liquid inlet chamber. Two first liquid inlet ports and two second liquid inlet ports are connected to the first fluid collecting member 1321 from two sides of the first fluid collecting member 1321 in the first direction respectively, and the heat exchange tube 131 communicates with the liquid inlet chamber. The second fluid collecting member 1322 is provided in two. The second fluid collecting member 1322 is provided with a liquid outlet chamber and a liquid outlet communicating with the liquid outlet chamber. In the third direction, the first liquid outlet ports and the second liquid outlet ports of the two heat exchange tubes 131 on the same side of the first heat exchange assembly and the second heat exchange assembly are connected to the second fluid collecting member 1322 from two sides of the second fluid collecting member 1322 in the first direction respectively, and the heat exchange tube 131 communicates with the liquid outlet chamber. The two heat exchange tubes 131 on the other side are connected to the other second fluid collecting member 1322 in the same way.

The first fluid collecting member 1321 and the second fluid collecting member 1322 may be processed and manufactured using aluminum or plastic material. The heat exchange tube 131 may be an aluminum tube. When the first fluid collecting member 1321 and the second fluid collecting member 1322 are made of aluminum, the first fluid collecting member 1321 and the second fluid collecting member 1322 may be connected to the liquid inlet port and the liquid outlet port of the heat exchange tube 131 by welding. When the first fluid collecting member 1321 and the second fluid collecting member 1322 are made of plastic material, the first fluid collecting member 1321 and the second fluid collecting member 1322 may be connected and fixed to the heat exchange tube 131 by adhesion, hot melting, or the like.

In the electric apparatus 100 according to the embodiments of this application, the first heat exchange member 1301 is provided on the other side of the battery assembly 12 in the first direction, and two ends of the first heat exchange member 1301 in the second direction are fixed to the two expansion beams 14 respectively, so that the first heat exchange member 1301 can well perform heat exchange on the battery assembly 12, and the first heat exchange member 1301 can cooperate with the expansion beams 14 to well suppress the swelling of the battery cells 121, thereby enabling stable and reliable operation of the battery 10 and more diverse functions of the heat exchange assembly.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the foregoing embodiments or make equivalent replacements to some or all technical features thereof without departing from the scope of the technical solutions in the embodiments of this application. All such modifications and equivalent replacements shall fall within the scope of the claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery, comprising:
a box (11), wherein the box (11) has an accommodating cavity (1101);
a battery assembly (12), wherein the battery assembly (12) is disposed in the accommodating cavity (1101), one surface of the battery assembly (12) in a first direction is fixed to a first wall (1121) of the accommodating cavity (1101), and the battery assembly (12) comprises a plurality of battery cells (121) stacked in a second direction;
two expansion beams (14), wherein the expansion beams (14) are disposed in the accommodating cavity (1101) and fixedly connected to the box (11), the two expansion beams (14) both extend in a third direction and are disposed on two sides of the battery assembly (12) in the second direction respectively, and the two expansion beams (14) both abut against the battery assembly (12), the first direction, the second direction, and the third direction intersecting with each other; and
a heat exchange assembly, wherein the heat exchange assembly comprises a first heat exchange member (1301), the first heat exchange member (1301) is disposed on the other side of the battery assembly (12) in the first direction, two ends of the first heat exchange member (1301) in the second direction are fixed to the two expansion beams (14) respectively, and the first heat exchange member (1301) comprises a heat exchange tube (131), wherein the heat exchange tube (131) comprises a plurality of straight tube segments (1311), the plurality of straight tube segments (1311) extend in the second direction and are spaced apart in the third direction, and two ends of the straight tube segment (1311) are connected and fixed to the two expansion beams (14) respectively.

2. The battery according to claim 1, wherein the battery further comprises a connecting member (15), and the two ends of the straight tube segment (1311) are both fixed to the expansion beam (14) via the connecting member (15).

3. The battery according to claim 2, wherein the connecting member (15) is fixed to a side of the expansion beam (14) facing away from the first wall (1121) of the accommodating cavity (1101) in the first direction, the connecting member (15) and the expansion beam (14) fit together to form a fixing hole (101), and an end portion of the straight tube segment (1311) is configured to be inserted into and fixed within the fixing hole (101).

4. The battery according to claim 3, wherein the connecting member (15) extends in the third direction, wherein in the third direction, the connecting member (15) is fixed to the expansion beam (14) at two ends and recessed away from the expansion beam (14) at a middle portion to form a recessed portion (151), and the recessed portion (151) and the expansion beam (14) enclose the fixing hole (101).

5. The battery according to claim 4, wherein the recessed portion (151) is welded to the straight tube segment (1311), and/or the two ends of the connecting member (15) in the third direction are both welded or fastened to the expansion beam (14).

6. The battery according to any one of claims 1 to 5, wherein the heat exchange tube (131) further comprises a bent tube segment (1312), and the bent tube segment (1312) is disposed on an outer side of the expansion beam (14) in the second direction and is connected between two adjacent straight tube segments (1311).

7. The battery according to any one of claims 1 to 6, wherein the first heat exchange member (1301) comprises a plurality of heat exchange tubes (131), and the plurality of heat exchange tubes (131) are spaced apart in the third direction.

8. The battery according to claim 7, wherein the first heat exchange member (1301) comprises two heat exchange tubes (131), and the two heat exchange tubes (131) are symmetrically arranged in the third direction.

9. The battery according to any one of claims 1 to 8, wherein an adhesive layer is provided between the first heat exchange member (1301) and the battery assembly (12), and the first heat exchange member (1301) is adhesively fixed to the battery assembly (12) via the adhesive layer.

10. The battery according to claim 9, wherein the adhesive layer completely covers a surface of the first heat exchange member (1301) facing toward the battery assembly (12), or the adhesive layer completely covers a surface of the battery assembly (12) facing toward the first heat exchange member (1301).

11. The battery according to claim 9 or 10, wherein the adhesive layer is a thermally conductive structural adhesive.

12. The battery according to any one of claims 1 to 11, wherein the heat exchange assembly further comprises a second heat exchange member (1302), the second heat exchange member (1302) is disposed on a side of the battery assembly (12) facing toward the first wall (1121) in the first direction, and the second heat exchange member (1302) is fixedly connected to both the battery assembly (12) and the first wall (1121) of the accommodating cavity (1101).

13. The battery according to claim 12, wherein the second heat exchange member (1302) and the first heat exchange member (1301) have the same structure, or the second heat exchange member (1302) and the first heat exchange member (1301) have different structures.

14. The battery according to claim 12 or 13, wherein the heat exchange assembly further comprises a fluid collecting structure (132), the fluid collecting structure (132) has a liquid inlet chamber and a liquid outlet chamber that are spaced apart, a first liquid inlet port of the first heat exchange member (1301) and a second liquid inlet port of the second heat exchange member (1302) are both connected to the liquid inlet chamber, and a first liquid outlet port of the first heat exchange member (1301) and a second liquid outlet port of the second heat exchange member (1302) are both connected to the liquid outlet chamber.

15. The battery according to claim 14, wherein the fluid collecting structure (132) is disposed on a side of the expansion beam (14) facing away from the battery assembly (12) in the second direction, and the fluid collecting structure (132) comprises:
a first fluid collecting member (1321), wherein the first fluid collecting member (1321) has the liquid inlet chamber; and
a second fluid collecting member (1322), wherein the second fluid collecting member (1322) is provided in two, the two second fluid collecting members (1322) are disposed on two sides of the first fluid collecting member (1321) in the third direction respectively, and the two second fluid collecting members (1322) both have the liquid outlet chamber.

16. The battery according to any one of claims 12 to 15, wherein the second heat exchange member (1302) is adhesively connected to the battery assembly (12) and the first wall (1121) of the accommodating cavity (1101).

17. The battery according to any one of claims 1 to 16, wherein the box (11) comprises a box body (112) and a cover plate (111), the box body (112) has the accommodating cavity (1101) open on one side in the first direction, and the cover plate (111) covers the open side of the accommodating cavity (1101).

18. An electric apparatus, comprising the battery according to any one of claims 1 to 17.
